# DEMANDE DE BREVET EUROPEEN

(11) **EP 3 450 233 A1**
(43) Date de publication de la demande: **06.03.2019**
(21) Numéro de dépôt: 18191067.0
(22) Date de dépôt: 28.08.2018
(51) Int. Cl.: B60J 5/04, B60J 5/10

(54) **OUVRANT DE VÉHICULE COMPRENANT AU MOINS DEUX PIÈCES ASSEMBLÉES PAR UN ÉLÉMENT DE FIXATION AUTO AGRIPPANT ET PROCÉDÉ D'ASSEMBLAGE ASSOCIÉ**

(30) Priorité: 28.08.2017 FR 1757909
(71) Demandeur: Flex-N-Gate France, 25405 Audincourt (FR)
(72) Inventeur: DUQUESNOY, David, 25200 MONTBELIARD (FR); HENIGUE, Christian, 90100 SUARCE (FR)
(74) Mandataire: Lavoix

(57) **Abrégé**

Cet ouvrant (10) comprend au moins une première pièce (18) et une deuxième pièce (20) assemblées entre elles, chaque pièce (18, 20) comprenant au moins une surface de fixation (24, 26) fixée à la surface de fixation (24, 26) de l'autre pièce (18, 20), chaque surface de fixation (24, 26) comprenant au moins une première partie (32, 34) et une deuxième partie (36, 38) distinctes, la première partie (32, 34) de la surface de fixation (24, 26) de la première (18) et la deuxième pièce (20) étant assemblées entre elles par une colle (40), la deuxième partie (36, 38) de la surface de fixation (24, 26) de la première (18) et la deuxième pièce (20) étant assemblées entre elles par un élément de fixation auto agrippant (42).

## Description

La présente invention concerne un ouvrant de véhicule comprenant au moins une première pièce et une deuxième pièce assemblées entre elles, chaque pièce comprenant au moins une surface de fixation fixée à la surface de fixation de l'autre pièce, la surface de fixation de chaque pièce comprenant au moins une première partie et une deuxième partie distinctes, dans lequel la première partie de la surface de fixation de la première pièce et la première partie de la surface de fixation de la deuxième pièce sont assemblées entre elles par une colle,

L'invention concerne également un procédé d'assemblage d'un tel ouvrant de véhicule.

De manière générale, les pièces d'un ouvrant de véhicule tel qu'un hayon ou une porte de véhicule sont assemblées par collage. Avant de positionner deux pièces l'une par rapport à l'autre, un film d'une colle thermodurcissable est appliqué sur l'une et/ou l'autre des pièces à assembler dans une installation de réalisation de l'ouvrant. Puis, les deux pièces sont rapportées et positionnées l'une par rapport à l'autre. Ensuite, les pièces sont chauffées afin d'activer la colle thermodurcissable. Enfin, l'ouvrant assemblé est extrait de l'installation.

L'activation de la colle thermodurcissable nécessite de chauffer les pièces pendant un certain temps. Pendant ce temps, l'installation est occupée ce qui constitue un temps mort dans le procédé de fabrication de la pièce. Le procédé d'assemblage de l'état de la technique présente donc une limite capacitaire de production, dépendant du temps de cycle nécessaire à l'installation pour assembler des pièces.

De plus, le chauffage des pièces engendre un coût énergétique important.

En outre, le chauffage de l'installation rend celle-ci coûteuse et encombrante.

Enfin, l'activation de la colle est réalisée par un apport de chaleur par conduction en chauffant les pièces à coller. Ceci est dû au fait que la colle est inaccessible car elle est mise en place entre les deux pièces. Il n'est donc pas possible de chauffer directement la colle. Or, la chauffe des pièces occasionne :
- des déformations dues aux dilatations différentielles des pièces à coller ;
- des problèmes de marquage de surfaces d'aspect ; et
- des temps de cycle supérieurs à la minute, impliquant un investissement capacitaire important ou un capacitaire limité au nombre d'installations mises en place.

Par ailleurs, la matière plastique n'étant pas un bon conducteur thermique, le procédé est extrêmement difficile si les deux pièces à coller sont en matière plastique.

D'autres procédés ont été envisagés, par exemple l'utilisation d'une colle réticulable et le pré-maintien par vissage ou par utilisation de pontets à clips pour assurer la fixation pendant la manipulation de l'ouvrant de véhicule pendant le temps de réticulation de la colle. Par « réticulation », on entend ici la formation d'un ou plusieurs réseaux de polymères tridimensionnels à partir de polymères linéaires ou ramifiés de faible masse molaire.

Cependant, le pré-maintien avec du vissage ou des pontets nécessite un aménagement sur la pièce qui occasionne des défauts d'aspect.

En outre ces fixations n'apportent pas suffisamment de degrés de liberté pour ne pas comprimer la colle.

L'un des buts de l'invention est de pallier les inconvénients décrits ci-dessus.

A cet effet, l'invention a notamment pour objet un ouvrant de véhicule du type précité, dans lequel la deuxième partie de la surface de fixation de la première pièce et la deuxième partie de la surface de fixation de la deuxième pièce sont assemblées entre elles par un élément de fixation auto agrippant.

Un tel élément de fixation auto agrippant permet notamment aux pièces de l'ouvrant déjà assemblées de résister à la manipulation par un opérateur durant l'assemblage de pièces supplémentaires de l'ouvrant de véhicule ainsi que durant le transport de cet ouvrant, pendant que la colle subit une réticulation. Ainsi, l'ouvrant n'est pas immobilisé pendant la réticulation de la colle, ce qui engendre un gain de temps, et de ce fait, une augmentation de la productivité.

Par ailleurs, la fixation des pièces de l'ouvrant ne nécessite aucune modification ou adaptation préalable de l'une ou de l'autre pièce à fixer.

L'ouvrant selon l'invention peut comprendre une ou plusieurs des caractéristiques suivantes, prise(s) isolément ou suivant toute combinaison techniquement possible :
- au moins l'une des pièces est réalisée dans un matériau thermoplastique ;
- plusieurs éléments de fixation auto agrippants sont pris en sandwich entre la deuxième partie de la surface de fixation de la première pièce et la deuxième partie de la surface de fixation de la deuxième pièce, et sont espacés les uns des autres ;
- l'élément de fixation auto agrippant comprend une première portion solidaire de la deuxième partie de la surface de fixation de la première pièce, et une deuxième portion solidaire de la deuxième partie de la surface de fixation de la deuxième pièce ;
- l'une de la première portion et de la deuxième portion de l'élément de fixation auto agrippant comprend des boucles, et l'autre de la première portion et de la deuxième portion de l'élément de fixation auto agrippant comprend des crochets ;
- la première partie et la deuxième partie de la surface de fixation de chaque pièce sont localement espacées d'une distance prise perpendiculairement à l'une ou l'autre des surfaces de fixation comprise entre 5 mm (millimètres) et 20 mm
- l'ouvrant de véhicule forme au moins une partie d'un hayon.

L'invention concerne également un procédé d'assemblage d'un ouvrant de véhicule où chaque pièce présente au moins une surface de fixation destinée à être fixée à la surface de fixation de l'autre pièce, la surface de fixation de chaque pièce comprenant au moins une première partie et une deuxième partie distinctes, le procédé comprenant les étapes suivantes : fourniture d'un élément de fixation auto agrippant comportant une première portion et une deuxième portion aptes à être assemblées,
- fixation de la première portion sur la deuxième partie de la surface de fixation de la première pièce,
- fixation de la deuxième portion sur la deuxième partie de la surface de fixation de la deuxième pièce,
- application d'une colle sur les premières parties de la surface de fixation,
- assemblage des deux portions de l'élément de fixation auto agrippant entre elles, et
- réticulation de la colle.

Le procédé selon l'invention peut comprendre une ou plusieurs des caractéristiques suivantes, prise(s) isolément ou suivant toute combinaison techniquement possible :
- après l'assemblage des deux portions de l'élément de fixation auto agrippant, la surface de fixation de la première pièce et la surface de fixation de la deuxième pièce sont espacées suivant une direction localement perpendiculaire à chaque surface de fixation d'une distance agencée pour ne pas comprimer la colle ;
- au moins une troisième pièce de l'ouvrant de véhicule est assemblée à la première pièce et/ou à la deuxième pièce pendant l'étape de réticulation de la colle.

L'invention sera mieux comprise à la lecture de la description qui va suivre, donnée uniquement à titre d'exemple, et faite en référence aux dessins annexés, sur lesquels :
- la Figure 1 est une vue schématique en coupe d'une partie d'un ouvrant de véhicule selon l'invention, et
- la Figure 2 est une vue de détail de l'ouvrant de la Figure 1 illustrant l'assemblage entre deux pièces de l'ouvrant.

Dans tout ce qui suit, les orientations sont les orientations habituelles d'un véhicule automobile. En particulier, les termes « supérieur », « inférieur », « gauche », « droit », « au-dessus », « en-dessous », « vers l'avant » et « vers l'arrière » s'entendent généralement par rapport au sens normal de circulation du véhicule automobile et à la position du conducteur.

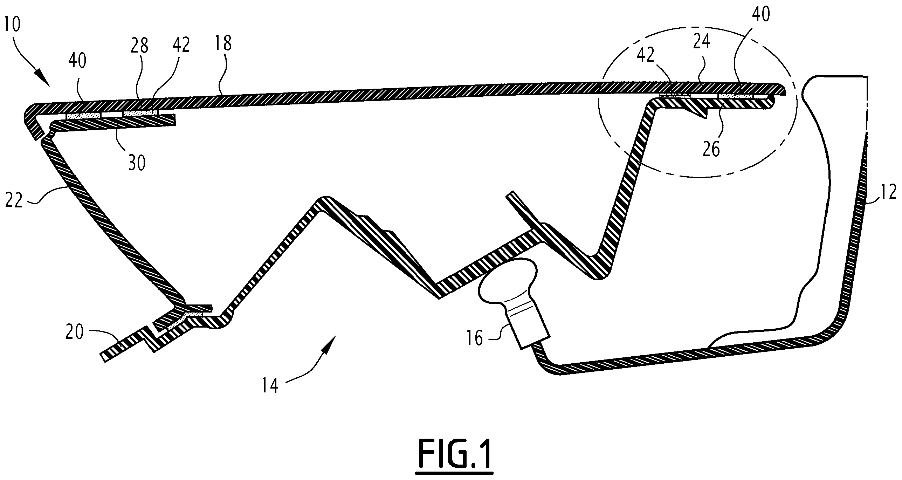

Un ouvrant de véhicule 10 est représenté sur la Figure 1.

Par souci de clarté, on a également représenté sur la Figure 1 une structure de caisse 12 du véhicule.

Cette structure de caisse 12 délimite une ouverture 14.

L'ouverture 14 est propre à donner l'accès à l'intérieur d'une partie du véhicule, et la structure de caisse 12 comprend un joint d'étanchéité 16 autour de l'ouverture.

L'ouvrant 10 est mobile entre une position fermée, dans laquelle l'ouvrant 10 ferme l'ouverture et une position ouverte dans laquelle l'ouvrant 10 est écarté de l'ouverture et expose celle-ci.

L'ouvrant 10 est ici représenté en position fermée par rapport à l'ouverture 14 délimitée par la structure de caisse 12.

L'ouvrant 10 comporte une pluralité de pièces 18, 20, 22.

De préférence, au moins une pièce 18, 20, 22 est réalisée dans un matériau thermoplastique. Le matériau thermoplastique est par exemple choisi parmi les matériaux suivants : le polypropylène (PP), le polyamide (PA), le polyéthylène (PE), l'acrylonitrile butadiène styrène (ABS), le polyéthylène téréphtalate (PET), le polycarbonate (PC), le polyméthacrylate de méthyle (PMMA) et les combinaisons de ces matériaux.

Les autres pièces sont réalisées par exemple dans un matériau thermodurcissable, ou tout autre matériau couramment utilisé pour la fabrication de pièces d'ouvrant de véhicule.

La pluralité de pièces 18, 20, 22 comprend une première pièce 18 et au moins une deuxième pièce 20, 22 assemblées entre elles.

Chaque pièce 18, 20, 22 comprend au moins une surface de fixation 24, 26, 28, 30, fixée à la surface de fixation 24, 26, 28, 30 de l'autre pièce 18, 20, 22.

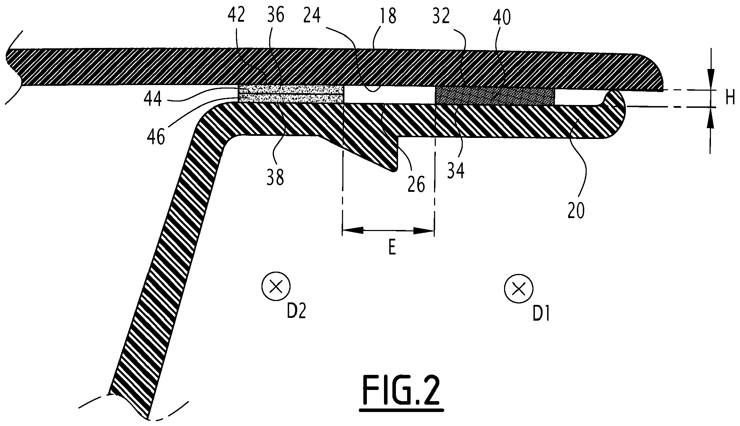

Comme visible sur la Figure 2, cette surface de fixation 24, 26 comprend au moins une première partie 32, 34 et une deuxième partie 36, 38 distinctes.

La première partie 32, 34 de chaque surface de fixation 24, 26 de chaque pièce 18, 20 forme par exemple une première bande. Cette première bande s'étend localement suivant une première direction D1.

La deuxième partie 36, 38 de chaque surface de fixation 24, 26 de chaque pièce 18, 20 forme par exemple une deuxième bande. Cette deuxième bande s'étend localement suivant une deuxième direction D2.

La première direction D1 et la deuxième direction D2 sont sensiblement parallèles.

De préférence, la première partie 32, 34 et la deuxième partie 36, 38 de la surface de fixation 24, 26 de chaque pièce 18, 20 sont espacées d'une distance E prise perpendiculairement à l'une ou l'autre de la première direction D1 ou de la deuxième direction D2 comprise entre 5 mm et 20 mm.

La première partie 32 de la surface de fixation 24 de la première pièce 18 et la première partie 34 de la surface de fixation 26 de la deuxième pièce 20 sont assemblées entre elles par une colle 40, comme connu en soi.

La colle 40 est par exemple une colle ayant la capacité de réticuler, même lentement, à température ambiante. On peut par exemple utiliser la colle suivante : DELO-DUALBOND ® 2K VE 518202 (DELO Gmbh, Allemagne), qui est un uréthane acrylate bi-composants.

La colle acquiert un pouvoir adhérent au cours de sa réticulation qui assure une fixation robuste entre les pièces 18, 20 une fois que la réticulation est complète.

La deuxième partie 36 de la surface de fixation 24 de la première pièce 18 et la deuxième partie 38 de la surface de fixation 26 de la deuxième pièce 20 sont assemblées entre elles par un élément de fixation auto agrippant 42.

L'élément de fixation auto agrippant 42 comprend une première portion 44 solidaire de la deuxième partie 36 de la surface de fixation 24 de la première pièce 18, et une deuxième portion 46 solidaire de la deuxième partie 38 de la surface de fixation 26 de la deuxième pièce 20.

Ainsi, l'élément de fixation auto agrippant 42 est disposé en sandwich entre les deuxièmes parties 36, 38 respectives de chaque surface de fixation 24, 26.

Par exemple, l'une de la première portion 44 et de la deuxième portion 46 de l'élément de fixation auto agrippant 42 comprend des boucles.

Selon cet exemple, l'autre de la première portion 44 et de la deuxième portion 46 de l'élément de fixation auto agrippant 42 comprend des crochets.

Les crochets sont complémentaires des boucles.

De préférence, plusieurs éléments de fixation auto agrippants 42 sont pris en sandwich entre la deuxième partie 36 de la surface de fixation 24 de la première pièce 18 et la deuxième partie 38 de la surface de fixation 26 de la deuxième pièce 20, et sont espacés les uns des autres.

Selon cet exemple, les éléments de fixation auto agrippants 42 se présentent sous la forme de bandes réparties de manière discontinue suivant la deuxième direction D2 définie par la deuxième partie 36, 38 de chaque surface de fixation 24, 26. Par discontinue, on entend que les bandes sont espacées les unes des autres suivant la deuxième direction D2.

Les bandes d'éléments de fixation auto agrippants 42 présentent des dimensions en termes de taille et de profil d'emboîtement adaptées pour résister à la manipulation d'un opérateur pendant l'assemblage et le transport de l'ouvrant de véhicule 1, c'est-à-dire pour que la fixation par les éléments de fixation auto agrippants 42 soit suffisante pour permettre la manipulation de l'ouvrant 10 sans désolidarisation alors que la colle 40 n'assure pas encore la fixation des pièces 18, 20 entre elles. Par exemple, les bandes d'éléments de fixation auto agrippants 42 présentent une grande dimension, ou longueur, de 80 mm et une petite dimension, ou largeur, de 25 mm.

La force d'adhésion de la colle 40 réticulée est supérieure à la force d'adhésion des éléments de fixation auto agrippants 42, qui est elle-même supérieure à la force d'adhésion de la colle 40 non réticulée.

Ainsi, la colle 40 est nécessaire pour fixer les pièces 18, 20 en réponse aux exigences en termes de caractéristiques mécaniques de l'ouvrant 10.

Chaque portion 44, 46 de l'élément de fixation auto agrippant 42 est rapportée sur la deuxième partie 36, 38 de la surface de fixation 24, 26 par une colle, une soudure, un adhésif double face, ou tout autre élément d'assemblage.

En complément de cet élément de fixation auto agrippant 42, chaque pièce peut comporter en outre un élément de fixation supplémentaire. L'élément de fixation supplémentaire comprend par exemple des fixations positives démontables telles que des vis, des rivets, des pontets.

Selon un exemple, l'ouvrant de véhicule 10 forme au moins une partie d'un hayon.

Sur la figure 1, l'ouvrant est une partie d'un hayon 10 comprenant une pièce 20 dite doublure intérieure 20 et un becquet formé de deux pièces 18, 22.

La première pièce 18 du becquet est par exemple une peau de style, destinée à être visible depuis l'extérieur du véhicule. La deuxième pièce 22 du becquet est par exemple un élément de renforcement du becquet.

En variante, l'ouvrant de véhicule 10 forme au moins une partie d'une porte ou d'un capot de véhicule.

Parmi d'autres pièces que comprend l'ouvrant 10, on peut citer un bandeau extérieur, un habillage, une garniture, un support de capteur de parking ou de lave phare, un feu arrière, des enjoliveurs latéraux, etc.

Un exemple de procédé d'assemblage de la première pièce 18 et de la deuxième pièce 20 telles que décrites ci-dessus va maintenant être détaillé.

L'assemblage des différentes pièces 18, 20 est par exemple réalisé sur une chaîne de montage de véhicules.

Pour cela, le procédé d'assemblage selon l'invention comprend des étapes successives suivantes :
- fourniture d'un élément de fixation auto agrippant 42 comportant une première portion 44 et une deuxième portion 46 aptes à être assemblées,
- fixation de la première portion 44 sur la deuxième partie36 de la surface de fixation 24 de la première pièce 18,
- fixation de la deuxième portion 46 sur la deuxième partie 38 de la surface de fixation 26 de la deuxième pièce 20,
- application d'une colle 40 sur les premières parties 32, 34 de la surface de fixation 24, 26,
- assemblage des deux portions 44, 46 de l'élément de fixation auto agrippant 42 entre elles par application des surfaces de fixation 24, 26 l'une contre l'autre, et
- réticulation de la colle 40.
Chaque portion 44, 46 de l'élément de fixation auto agrippant 42 est rapportée sur la surface de fixation 24, 26 par adhésivage, soudage ou toute autre méthode d'assemblage permettant à l'élément de fixation auto agrippant 42 de résister à la manipulation par un opérateur durant l'assemblage de l'ouvrant de véhicule 10 et le transport de cet ouvrant 10.

De préférence, après l'assemblage des deux portions 44, 46 de l'élément de fixation auto agrippant 42, la surface de fixation 24 de la première pièce 18 et la surface de fixation 26 de la deuxième pièce 20 sont espacées suivant une direction localement perpendiculaire à chaque surface de fixation d'une distance H agencée pour ne pas comprimer la colle 40. Cette distance H est par exemple comprise entre 0,5 mm et 3 mm.

L'élément de fixation auto agrippant 42 permet de maintenir les deux pièces 18, 20 assemblées pendant le temps de réticulation de la colle 40, et ainsi de manipuler l'ouvrant de véhicule 10 et de poursuivre l'assemblage de toutes les pièces composant l'ouvrant de véhicule 10 sans perturber le cycle de réticulation de la colle 40.

Ainsi, selon un mode de réalisation, au moins une troisième pièce 22 de l'ouvrant de véhicule 10 est assemblée à la première pièce 18 et/ou à la deuxième pièce 20 pendant l'étape de réticulation de la colle 40.

Grâce aux caractéristiques décrites ci-dessus, il n'est pas nécessaire de prévoir des aménagements spécifiques sur les pièces à assembler, et aucun défaut d'aspect n'est occasionné, même lorsqu'une des pièces est réalisée dans un matériau thermoplastique. En outre, l'assemblage entre deux pièces laisse un degré de liberté et ne comprime pas la colle pendant l'assemblage d'autres pièces sur l'ouvrant de véhicule.

Ce procédé d'assemblage est standard est peut être adapté à tout ouvrant de véhicule.

## Revendications

1. Ouvrant de véhicule (10) comprenant au moins une première pièce (18) et une deuxième pièce (20) assemblées entre elles, chaque pièce (18, 20) comprenant au moins une surface de fixation (24, 26) fixée à la surface de fixation (24, 26) de l'autre pièce (18, 20), la surface de fixation (24, 26) de chaque pièce (18, 20) comprenant au moins une première partie (32, 34) et une deuxième partie (36, 38) distinctes, dans lequel la première partie (32) de la surface de fixation (24) de la première pièce (18) et la première partie (34) de la surface de fixation (26) de la deuxième pièce (20) sont assemblées entre elles par une colle (40), la deuxième partie (36) de la surface de fixation (24) de la première pièce (18) et la deuxième partie (38) de la surface de fixation (26) de la deuxième pièce (20) étant assemblées entre elles par un élément de fixation auto agrippant (42), l'élément de fixation auto agrippant (42) comprenant une première portion (44) solidaire de la deuxième partie (36) de la surface de fixation (24) de la première pièce (18), et une deuxième portion (46) solidaire de la deuxième partie (38) de la surface de fixation (26) de la deuxième pièce (20),
l'ouvrant de véhicule (10) étant **caractérisé en ce que** l'une de la première portion (44) et de la deuxième portion (46) de l'élément de fixation auto agrippant (42) comprend des boucles, et l'autre de la première portion (44) et de la deuxième portion (46) de l'élément de fixation auto agrippant (42) comprend des crochets.

2. Ouvrant de véhicule (10) selon la revendication 1, dans lequel au moins l'une des pièces est réalisée dans un matériau thermoplastique.

3. Ouvrant de véhicule (10) selon la revendication 1 ou 2, dans lequel plusieurs éléments de fixation auto agrippants (42) sont pris en sandwich entre la deuxième partie (36) de la surface de fixation (24) de la première pièce (18) et la deuxième partie (38) de la surface de fixation (26) de la deuxième pièce (20), et sont espacés les uns des autres.

4. Ouvrant de véhicule automobile (10) selon l'une quelconque des revendications précédentes, dans lequel la première partie (32, 34) et la deuxième partie (36, 38) de la surface de fixation (24, 26) de chaque pièce (18, 20) sont localement espacées d'une distance (E) prise perpendiculairement à l'une ou l'autre des surfaces de fixation (24, 26) comprise entre 5 mm et 20 mm.

5. Ouvrant de véhicule automobile (10) selon l'une quelconque des revendications précédentes, formant au moins une partie d'un hayon.

6. Procédé d'assemblage d'une première pièce (18) et d'une deuxième pièce (20) d'un ouvrant de véhicule (10) selon l'une quelconque des revendications précédentes, chaque pièce (18, 20) présentant au moins une surface de fixation (24, 26) destinée à être fixée à la surface de fixation (24, 26) de l'autre pièce (18, 20), la surface de fixation (24, 26) de chaque pièce (18, 20) comprenant au moins une première partie (32, 34) et une deuxième partie (36, 38) distinctes, le procédé comprenant les étapes suivantes : fourniture d'un élément de fixation auto agrippant (42) comportant une première portion (44) et une deuxième portion (46) aptes à être assemblées,
- fixation de la première portion (44) sur la deuxième partie (36) de la surface de fixation (24) de la première pièce (18),
- fixation de la deuxième portion (46) sur la deuxième partie (38) de la surface de fixation (26) de la deuxième pièce (20),
- application d'une colle (40) sur les premières parties (32, 34) de la surface de fixation (24, 26),
- assemblage des deux portions (44, 46) de l'élément de fixation auto agrippant (42) entre elles, et
- réticulation de la colle (40).

7. Procédé d'assemblage selon la revendication 6, dans lequel après l'assemblage des deux portions (44, 46) de l'élément de fixation auto agrippant (42), la surface de fixation (24) de la première pièce (18) et la surface de fixation (26) de la deuxième pièce (20) sont espacées suivant une direction localement perpendiculaire à chaque surface de fixation d'une distance (H) agencée pour ne pas comprimer la colle (40).

8. Procédé d'assemblage selon la revendication 6 ou 7, dans lequel au moins une troisième pièce (22) de l'ouvrant de véhicule (10) est assemblée à la première pièce (18) et/ou à la deuxième pièce (20) pendant l'étape de réticulation de la colle (40).
